# EUROPEAN PATENT APPLICATION

(11) **EP 2 530 543 A1**
(43) Date of publication of application: **05.12.2012**
(21) Application number: 12168622.4
(22) Date of filing: 21.05.2012
(51) Int. Cl.: G05B 19/418, H04L 29/06

(54) **Method and device for convert alarm messages in a fieldbus system from one protocol to another**

(30) Priority: 31.05.2011 US 201113149833
(71) Applicant: General Electric Company, Schenectady, NY 12345 (US)
(72) Inventor: Karaffa, John Michael, Salem, VA Virginia 24153-6422 (US); Downor, Johnny Stephen, Salem, VA Virginia 24153-6422 (US); Smith, Steven William, Salem, VA Virginia 24153-6422 (US); McMillan, David Evans, Salem, VA Virginia 24153-6422 (US); Harshfield, James Daniel, Salem, VA Virginia 24153-6422 (US); Pettigrew, William Robert, Salem, VA Virginia 24153-6422 (US)
(74) Representative: Picker, Madeline Margaret

(57) **Abstract**

An industrial process control system (10) is provided that includes one or more fieldbus devices (38, 40, 42, 44) configured to communicate alarm or alert information representative of alarms and alerts using a first format. The industrial process control system also includes a linking device (46, 48) connected to the one or more fieldbus devices (38, 40, 42, 44) that is configured to publish the alarm or alert information from the fieldbus devices (38, 40, 42, 44) to one or more computers (28, 30, 32, 34, 36) of the industrial process control system (10). A controller (26) is also included that is configured to receive the alarm or alert information from the linking device (46, 48). The controller (26) is configured to interpret the alarm or alert information and create a list of the alarms and alerts in a second format interpretable by an alarm server (70) of the industrial process control system (10), wherein the alarm server (70) cannot interpret the first format.

## Description

### BACKGROUND OF THE INVENTION

The subject matter disclosed herein relates to industrial process control systems, and, more specifically to monitoring and providing third-party diagnostic information to an industrial process control system.

Certain systems, such as an industrial process control system, may provide for Foundation Fieldbus diagnostic information monitoring and presentation capabilities for devices from common manufacturers. For example, such devices might include sensors, pumps, valves, and the like manufactured by the industrial process control system manufacturer. However, the industrial process control system often includes devices from third-party manufacturers. Such devices may not be configured to communicate with the industrial process control system. Accordingly, presenting this diagnostic information for these third-party devices in the industrial process control system may be challenging.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, an industrial process control system includes one or more fieldbus devices configured to communicate alarm or alert information representative of alarms and alerts using a first format. Additionally, the industrial process control system includes a linking device connected to the one or more fieldbus devices that is configured to publish the alarm or alert information from the fieldbus devices to one or more computers of the industrial process control system. The industrial process control system also includes a controller configured to receive the alarm or alert information from the linking device. The controller is configured to interpret the alarm or alert information and create a list of the alarms and alerts in a second format interpretable by an alarm server of the industrial process control system, wherein the alarm server cannot interpret the first format.

In a second embodiment, a method includes receiving, at a controller, device information for a field device comprising alarm or alert information in a first format. Next, the method includes translating, using the controller, the device information in the first format into a second format interpretable by an alarm server, wherein the alarm server cannot interpret the first format. The method continues with creating, using the controller, a list of the device information in the second format; and providing to the alarm server, from the controller, at least a portion of the list in the second format to the alarm server..

In a third embodiment, A non-transitory, tangible computer readable medium comprising executable code is provided. The code includes instructions to receive device information for one or more field devices, the device information comprising alarm or alert information in a first format; translate the device information from the first format into a second format interpretable by an alarm server of an industrial process control system, wherein the alarm server cannot interpret the first format; create a list of the translated device information in the second format; and provide at least a portion of the list to the alarm server of the industrial process control system.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a schematic diagram of an embodiment of an industrial process control system;
FIG. 2 is a block diagram of an embodiment of the industrial process control system of FIG. 1, depicting various components in further detail;
FIG. 3 is a process diagram of a process alarm and fieldbus alert publishing process for third-party devices, in accordance with an embodiment;
FIG. 4 is a process diagram depicting an embodiment of a dump request for process alarms and fieldbus alerts over a serial data interface (SDI);
FIG. 5 is a process diagram illustrating an embodiment of a user behavior command request process;
FIG. 6 is a process diagram illustrating an embodiment of a process for providing Foundation Fieldbus alarm transitions to SDI clients;
FIG. 7 is a process diagram illustrating an embodiment of a diagnostic alarm dump process; and
FIG. 8 is a process diagram illustrating an embodiment of a process for providing a user behavior command to affect the Foundation Fieldbus Diagnostic Alarms.

### DETAILED DESCRIPTION OF EMBODIMENTS OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

A typical Foundation Fieldbus device includes a Foundation Fieldbus Device Definition (DD) file, which may be provided by the manufacturer and includes information about the device in a format that is defined by the Foundation Fieldbus standard. This DD file may include device parameters, device descriptions, graphical symbols or icons, to present the device on a graphical user interface, software blocks, and the like, in a binary format that is consumable by a portion of the components present within a control system. However, control systems produced by different manufacturers do not provide standard protocols to monitor and interact with certain components that interpret this device information. Therefore, these control systems may not have access to information in the DD file that may be useful in visualizing and/or managing the device. The disclosed embodiments provide an industrial process control system that monitors and provides diagnostic information for third-party Foundation Fieldbus devices linked to the industrial process control system. The industrial process control system can thus monitor and interact with diagnostic information for devices manufactured by a multitude of manufacturers.

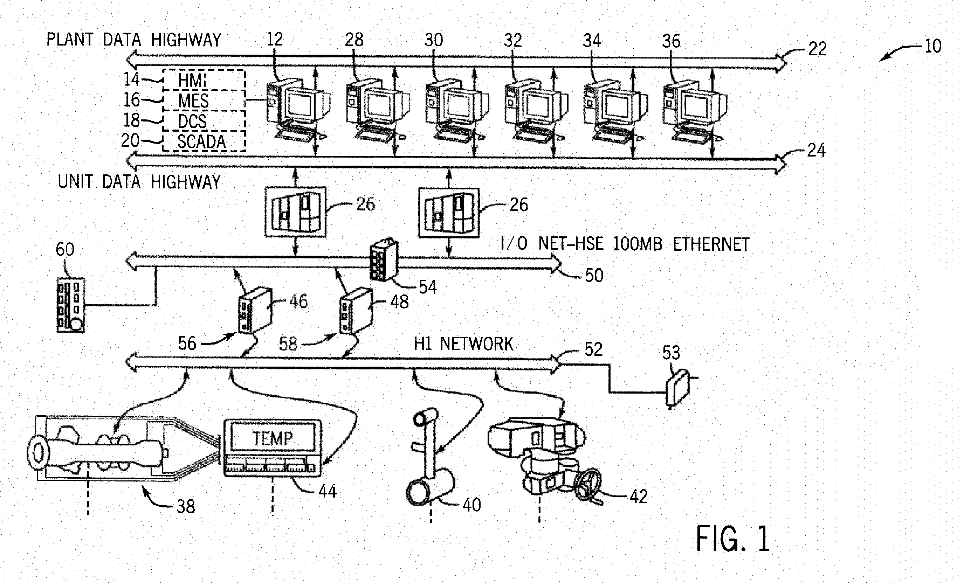

Turning to FIG. 1, an embodiment of an industrial process control system 10 is depicted. The control system 10 may include a computer 12 suitable for executing a variety of field device configuration and monitoring applications, and for providing an operator interface through which an engineer or technician may monitor the components of the control system 10. The computer 12 may be any type of computing device suitable for running software applications, such as a laptop, a workstation, a tablet computer, or a handheld portable device (e.g., personal digital assistant or cell phone). Indeed, the computer 12 may include any of a variety of hardware and/or operating system platforms. In accordance with one embodiment, the computer 12 may host an industrial control software, such as a human-machine interface (HMI) software 14, a manufacturing execution system (MES) 16, a distributed control system (DCS) 18, and/or a supervisor control and data acquisition (SCADA) system 20. For example, the computer 12 may host the ControlST™ software, available from General Electric Co., of Schenectday, New York.

Further, the computer 12 is communicatively connected to a plant data highway 22 suitable for enabling communication between the depicted computer 12 and other computers 12 in the plant. Indeed, the industrial process control system 10 may include multiple computers 12 interconnected through the plant data highway 22. The computer 12 may be further communicatively connected to a unit data highway (UDH) 24, suitable for communicatively coupling the computer 12 to industrial controllers 26. The system 10 may include other computers coupled to the plant data highway 22 and/or the unit data highway 24. For example, embodiments of the system 10 may include a computer 28 that executes a virtual controller, a computer 30 that hosts an Ethernet Global Data (EGD) configuration server, an Object Linking and Embedding for Process Control (OPC) Data Access (DA) server, an alarm server, or a combination thereof, a computer 32 hosting a General Electric Device System Standard Message (GSM) server, a computer 34 hosting an OPC Alarm and Events (AE) server, and a computer 36 hosting an alarm viewer. Other computers coupled to the plant data highway 22 and/or the unit data highway 24 may include computers hosting Cimplicity, ControlST, and Toolbox ST.

The system 10 may include any number and suitable configuration of industrial controllers 26. For example, in some embodiments the system 10 may include one industrial controller 26 or two, three, or more industrial controllers 26 for redundancy. The industrial controllers 26 may enable control logic useful in automating a variety of plant equipment, such as a turbine system 38, a valve 40, and a pump 42. Indeed, the industrial controller 26 may communicate with a variety of devices, including but not limited to temperature sensors 44, flow meters, pH sensors, temperature sensors, vibration sensors, clearance sensors (e.g., measuring distances between a rotating component and a stationary component), and pressure sensors. The industrial controller 26 may further communicate with electric actuators, switches (e.g., Hall switches, solenoid switches, relay switches, limit switches), and so forth.

In the depicted embodiment, the turbine system 38, the valve 40, the pump 42, and the temperature sensor 44 are communicatively interlinked to the automation controller 26 by using linking devices 46 and 48 suitable for interfacing between an I/O NET 50 and a H1 network 52. For example, the linking devices 46 and 48 may include the FG-100 linking device, available from Softing AG, of Haar, Germany. In some embodiments, a linking device, such as the linking device 48, may be coupled to the I/O NET through a switch 54. In such an embodiment, other components coupled to the I/O NET 50, such as one of the industrial controllers 26, may also be coupled to the switch 54. Accordingly, data transmitted and received through the I/O NET 50, such as a 100 Megabit (MB) high speed Ethernet (HSE) network, may in turn be transmitted and received by the H1 network 52, such as a 31.25 kilobit/sec network. That is, the linking devices 46 and 48 may act as bridges between the I/O Net 50 and the H1 network 52. Accordingly, a variety of devices may be linked to the industrial controller 26 and to the computer 12. For example, the devices, such as the turbine system 38, the valve 40, the pump 42, and the temperature sensor 44, may include industrial devices, such as Foundation Fieldbus devices that include support for the Foundation H1 bi-directional communications protocol. In such an embodiment, a Foundation Fieldbus power supply 53, such as a Phoenix Contact Fieldbus Power Supply available from Phoenix Contact of Middletown, PA, may also be coupled to the H1 network 52 and may be coupled to a power source, such as AC or DC power. The devices 38, 40, 42, and 44 may also include support for other communication protocols, such as those included in the HART® Communications Foundation (HCF) protocol, and the Profibus Nutzer Organization e.V. (PNO) protocol.

Each of the linking devices 46 and 48 may include one or more segment ports 56 and 58 useful in segmenting the H1 network 52. For example, the linking device 46 may use the segment port 56 to communicatively couple with the devices 38 and 44, while the linking device 48 may use the segment port 58 to communicatively couple with the devices 40 and 42. Distributing the input/output between the devices 38, 44, 40, and 42 by using, for example, the segment ports 56 and 58, may enable a physical separation useful in maintaining fault tolerance, redundancy, and improving communications time. In some embodiments, additional devices may be coupled to the I/O NET 50. For example, in one embodiment an I/O pack 60 may be coupled to the I/O NET 50.

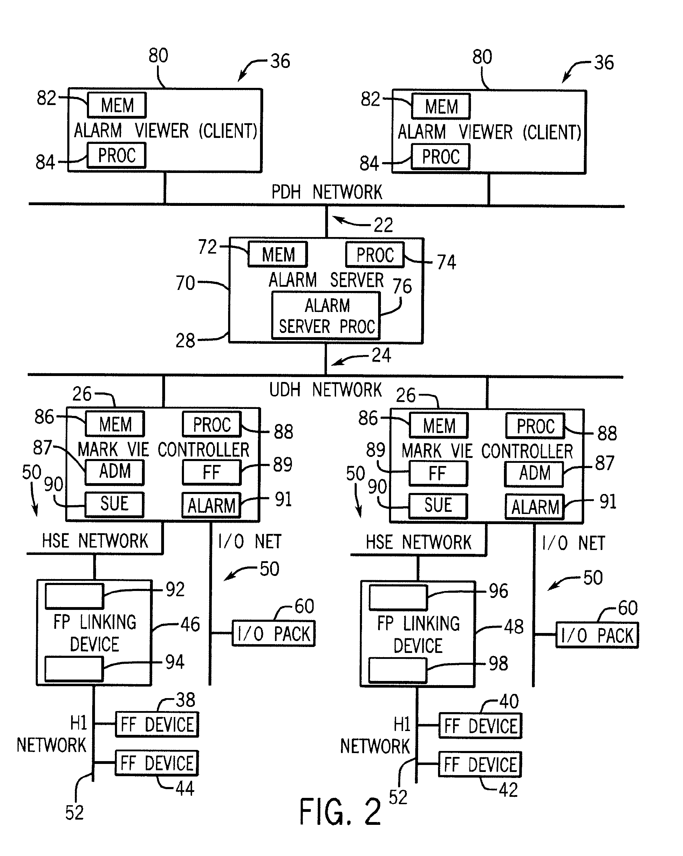

In certain embodiments, the devices 38, 40, 42, and 44 may provide data, such as alerts, to the system 10. These alerts may be handled in accordance with the embodiments described below. FIG. 2 depicts a block diagram of an embodiment of the system 10 depicting various components in further detail. As described above, the system 10 may include an alarm server 70, executed on the computer 28, coupled to the plant data highway 22 and the unit data highway 24. The computer 28 may include a memory 72, such as non-volatile memory and volatile memory, and a processor 74, to facilitate execution of the alarm server 70. The alarm server 70 may execute an alarm process 76 for receiving, processing, and responding to alarms received from the controllers 26.

The system 10 may include additional computers 36 coupled to the plant data highway 22 that may execute alarm viewers 80. The alarm viewers 80 may enable a user to view and interact with the alarms processed by the alarm server 70. The computers 78 may each include a memory 82 and a processor 84 for executing the alarm viewer 80. Additionally, in some embodiments, the alarm viewers 80 may be executed on the computer 28 or any of the computers described above in FIG. 1. The alarm server 70 may communicate with the alarm viewers 80 using any suitable alarm data protocol interpretable by the alarm viewers 80.

As described above, the controllers 26 are coupled to the unit data highway 24, and the controllers 26 may communicate with the alarm server 70 over the unit data highway 24. For example, in one embodiment, the controllers 26 and alarm server 70 may communicate using a serial data interface (SDI) alarm protocol. The controllers 26 may each include a memory 86, an alarm storage, such as an Alarm Data Manager 87, and a processor 88 for executing the functions of the controllers 26. In one embodiment, the controllers 26 may execute a Foundation Fieldbus process 89, a sequence of events (SOE) process 90, and an alarm process 91. As mentioned above, the controllers 26 may be coupled to the I/O pack 60 over the I/O NET 50. In one embodiment, the I/O pack 60 may communicate with the controllers 26 using the ADL protocol.

As also described above, the controllers 26 may be coupled to linking devices 46 and 48 through an I/O NET 50. The linking devices 46 and 48 may communicate with the controllers 26 over the I/O NET 50. The linking devices 46 and 48 may be coupled to the H1 network 52, and one linking device 46 may be coupled to devices 38 and 44 and another linking device 48 may be coupled to device 40 and 42. The linking device 46 may include a memory 92, such as volatile and non-volatile memory, and a processor 94, and the linking device 48 may include a memory 96, such as volatile and non-volatile memory, and a processor 98. In one embodiment, the linking devices 46 and 48 may communicate with the controllers 26 using the Foundation Fieldbus protocol.

The system 10 may enable alarm and diagnostic information to be communicated from the various devices to a user, such as through the HMI 14 and the alarm viewers 80. For example, the Foundation Fieldbus devices 38, 40, 42, and 44 may provide an alarm to the controller 26. The alarm may be provided from the controller 26 to the alarm server 70, which may process the alarm and provide information to the HMI 14, the alarm viewers 80, or any other computers coupled to the unit data highway 24 or plant data highway 22.

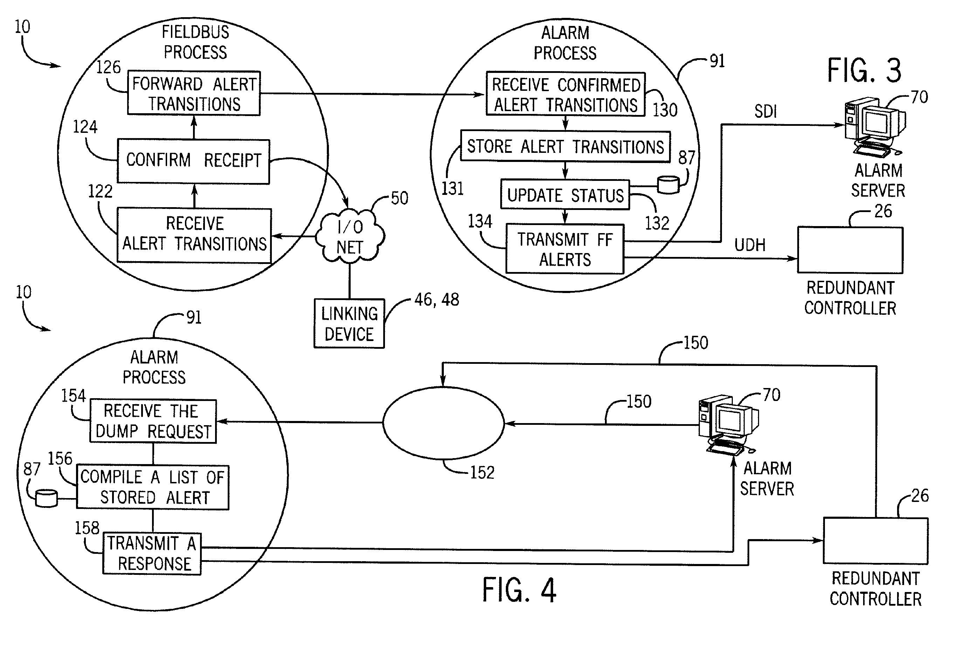

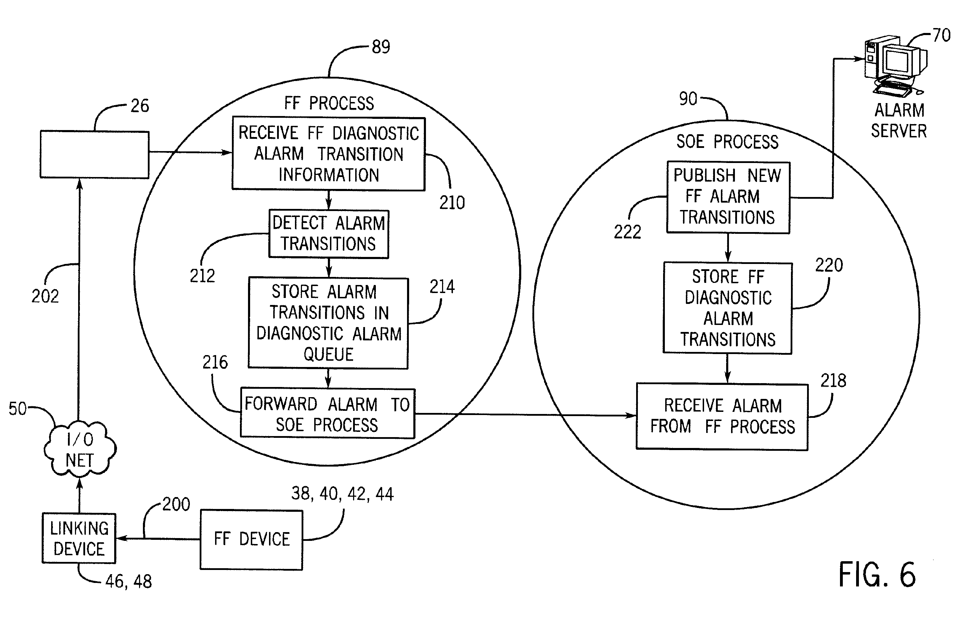

The industrial process control system 10 may be configured to provide support for Foundation Fieldbus alerts as well as alarms. As used herein, the term "process alarm" may be associated with either process control or process monitoring where a user can defme conditions for notification of certain events, whereas the term "diagnostic alarm" may be associated with alarms generated by conditions where a user does not define the triggering conditions. The term "alert" may be associated with a user notification option defined by the Foundation Fieldbus specification. As described further below, FIGS. 3-5 depict various embodiments of processes associated with Foundation Fieldbus alerts and process alarms, and FIGS. 6-8 illustrate embodiments of processes associated with Foundation Fieldbus diagnostic alarms.

As shown in FIGS. 3-5, the industrial process control system 10 may execute various processes, such as on the controllers 26. For example the controllers 26 may execute a Foundation Fieldbus process 89 and an alarm process 91. The Foundation Fieldbus process 89 may receive, confirm, and forward Fieldbus H1 Process and Diagnostic Alert transitions, or specific detected events or condtions that generate Foundation Fieldbus alarms, to the alarm process 91. The Foundation Fieldbus process 89 may gather and forward a dump or a snapshot of Fieldbus H1 Process and Diagnositc Alerts, or requested notifications of specific alarms or events, to the alarm process 91. Additionally, the Foundation Fieldbus process 89 may detect, store, and forward Fieldbus Diagnositc Alarm Transitions to SDI clients (e.g., the alarm server 70), gather and forward a dump or snapshot of Fieldbus Diagnostic Alarms to SDI clients, receive and fulfill acknowledge commands from the alarm process 91, and receive and fulfill reset commands from SDI clients (e.g., the alarm server 70).

The alarm process 91 may retain state information about Fieldbus H1 device Process and Diagnostic alerts, and receive and forward the Fieldbus H1 Process and Diagnostic Alerts to interfacing SDI clients (e.g, the alarm server 70). Additionally, the alarm process 91 may request, gather, and forward a dump or snapshot of the Fieldbus H1 Process and Diagnostic Alerts to interfacing SDI clients (e.g., the alarm server 70). The alarm process 91 may also receive dump and transition commands and update the state information relating to the Fieldbus H1 Device Process and Diagnostic Alerts. Additionally, the alarm process 91 may receive and fulfill commands from SDI clients, e.g., acknowledge, unacknowledge, reset, lock, unlock, silence, unsilence horn commands, such as from connected SDI clients (e.g., the alarm server 70). Acknowledge commands provide a status update that shows that an alert or alarm has been recognized by a user in the control system 10. Lock commands disable the ability to remove alarms from the snapshot of Fieldbus H1 Process and Diagnostic Alerts. Silence commands disable an alarming horn associated with a triggered alarm.

In some embodiments, a central data structure, such as an Alarm Data Manager 87, houses the Foundation Fieldbus alerts. The Alarm Data Manager 87 includes a Fieldbus H1 Device Alert Data Object that stores information pertaining to the Fieldbus H1 Device Alert information. The Fieldbus H1 Device Alert Data Object may include fields defining the Foundation Fieldbus Alert type (e.g., unknown, analog, discrete, update event, or field diagnostic). The Foundation Fieldbus alerts are separated and stored in tables based upon the alert type. Each alert table includes information about the specific Foundation Fieldbus alerts of a specific type. For example, alert information may include a Foundation Fieldbus block index, a time stamp, a manufacturer type, and other values associated with the Foundation Fieldbus alerts.

FIG. 3 illustrates an embodiment of processes of an industrial process control system 10 enabled to consume Foundation Fieldbus alert transitions and provide them to interfacing clients of the control system 10. These alert transitions may be in a first format that is not interpretable by control systems from other manufacturers. These processes enable the control system 10 to interpret, translate, and provide Foundation Fieldbus alert transitions for third-party manufacturers to the interfacing clients of the control system 10. In the depicted embodiment, linking devices 46 and 48 propagate Foundation Fieldbus Alert transitions via a broadcast to a multicast address within the industrial process control system 10. As shown in FIG. 3, a Foundation Fieldbus process 89 receives one or more alert transitions over the I/O Net 50 (at block 122). The Foundation Fieldbus process 89 then confirms receipt of the one or more alert transitions by sending a confirmation message to the linking devices 46, 48 through the I/O network (at block 124). Next, the confirmed alert transition is forwarded to an alarm process 91 (at block 126). The alarm process 91 receives the confirmed alert transitions (at block 130). It then translates (i.e., stores the Foundation Fieldbus alert transitions in the Alarm Data Manager 87 in a format interpretable by the control system 10 (i.e., workstation alarm server 70) (at block 131). The translation from Foundation Fieldbus format to a second format interpretable by the control system 10 may require the use of a translation key, or central repository with DD file information capable of mapping the Foundation Fieldbus format to the second format. Next, the alarm process 91 updates the alert state based upon the received alert transitions (at block 132). Additionally, the alarm process 91 transmits the Foundation Fieldbus Alert transitions to SDI clients (e.g., workstation alarm server 70) and unit data highway (UDH) communicators (e.g., controllers 26) (at block 134).

As described above, the alarm process 91 occasionally receives a request to dump the process alarms and fieldbus alerts over SDI. FIG. 4 is a process diagram illustrating dumping process alarms and Foundation Fieldbus alerts in accordance with an embodiment of the present invention. The SDI process alarm and fieldbus alert dump request begins with an SDI client sending a dump request, as depicted by arrow 150, over a serial data interface 152. For example, SDI clients may include a workstation alarm server 70 or a controller 26 that is not configured with UDH communications, and thus the SDI clients communicate over the SDI 152. The dump request may include a specification of channel and/or producer identifiers. The channel identifier specifies a specific transmission pipe such as R, S, or T; while the producer identifier specifies a specific module within the transmission pipe. When the channel and producer identifiers are specified, the dump request can be directed to alerts for a specific linking device 46 or 48, and/or Foundation Fieldbus device 38, 40, 42, 44. When the channel and producer identifiers are not specified, the dump request may be directed to all alerts within the industrial process control system 10.

As further shown in FIG. 4, the alarm process 91 receives the dump request (at block 154) and compiles a list of all the stored Foundation Fieldbus alerts (at block 156). Next, the alarm process 91 transmits a response including the list of all the stored Foundation Fieldbus alerts to the SDI clients (e.g., controllers 26, workstation alarm server 70) (at block 158).

The controllers 26 may obtain an initial understanding of the active Foundation Fieldbus alerts for each Foundation Fieldbus device (e.g., 38, 40, 42, 44). For example, controllers capable of communicating using SDI may use the SDI dump process discussed with regards to FIG. 4 to gain this initial understanding. However, for controllers enabled to communicate over UDH, the alarm process 91 may be enabled to provide the dump over UDH to satisfy dump requests from such controllers 26.

As previously discussed, users may execute behavior commands for and in response to Foundation Fieldbus alerts. For example, alarms may be provided with user behavior commands that acknowledge/unacknowledge, lock/unlock, reset, and silence/unsilence the alarms. The controllers 26 may provide additional behaviors on top of the Foundation Fieldbus to provide support for some of these behavior commands. For example, the controllers 26 may be enabled to consume the Foundation Fieldbus alerts as well as translate and provide the alerts in a second format interpretable by the alarm server 70 of the control system 10. The control system 10 may also provide an additional set of settable flags to enable this functionality in the industrial process control system 10. Because the industrial process control system 10 pulls the Foundation Fieldbus alerts from the controllers 26 in a second format that interpretable by the alarm server 70 of the of the control system 10, the additional settable flags enable the additional behaviors provided by the controllers 26. For example, the lock, unlock, reset, silence, and unsilence behaviors may be enabled by utilizing additional flags and variables in the controllers 26.

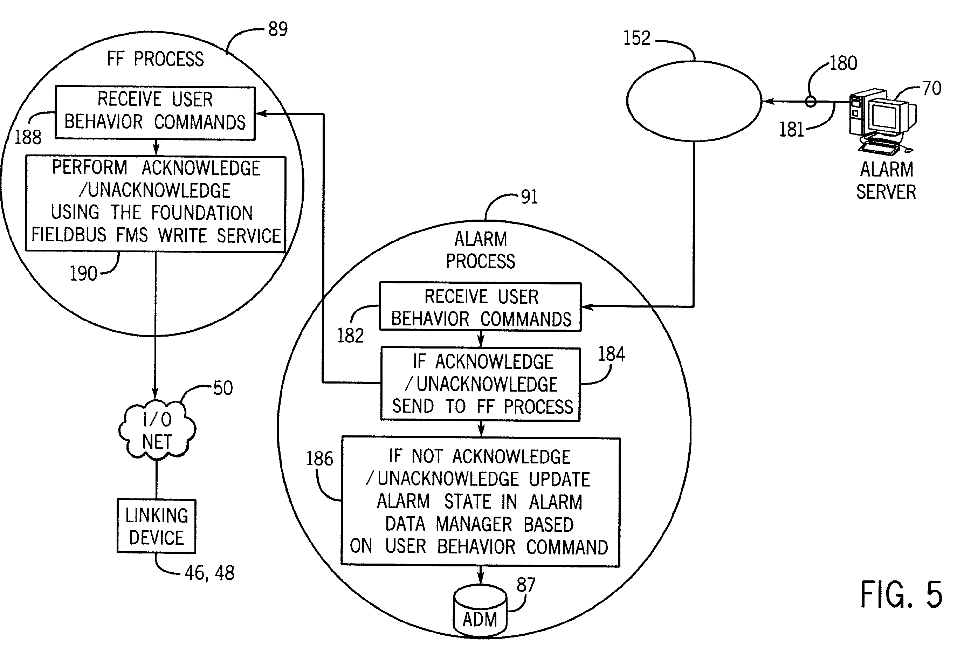

FIG. 5 illustrates processing of the behavior commands described above in accordance with an embodiment of the industrial process control system 10. Such processing enables the control system 10 to interact with a fieldbus alert for a variety of manufacturers, including third-party manufacturers. Upon observing an active alert, the user of an SDI client (e.g., workstation alarm server 70) may desire to perform an action on the alert. The SDI client (e.g., workstation alarm server 70) sends a user behavior command 180 to the alarm process 91, represented by arrow 181 through the SDI 152. The alarm process 91 receives the user behavior commands 180 (at block 182). If the user behavior commands 180 are acknowledge or unacknowledge commands, the alarm process 91 sends the user behavior commands 180 to the Foundation Fieldbus process 89 (at block 184), as these actions are supported by Foundation Fieldbus standard directly, without requiring additional steps within the control system 10. Otherwise, the alarm process 91 updates the alarm states within the alarm process 91 based upon the user behavior commands 180 by updating the alarm tables in the Alarm Data Manager 87 (at block 186). Upon receiving an acknowledge or unacknowledge user behavior command 180 (at block 188), the Foundation Fieldbus process 89 performs the user behavior command 180 by utilizing the Foundation Fieldbus FMSwrite service (at block 190) over the I/O NET 50 to the linking devices 46 and 48 to acknowledge or unacknowledge the alert.

In some embodiments, Foundation Fieldbus Diagnostic Alarm conditions may be detected by the industrial process control system 10. For example, the industrial process control system 10 may detect communication errors with a Foundation Fieldbus device (e.g., 38, 40, 42, 44) under a linking device (e.g., 46, 48). Such errors may be detectable by comparing a list of addresses of Fieldbus devices with a list of addresses of devices that are anticipated to be present within the industrial process control system 10. Additionally, the industrial process control system 10 may detect that a Foundation Fieldbus device (e.g., 38, 40, 42, 44) coupled to a linking device (e.g., 46, 48) is not present. Other conditions that may be detected include a detection that the linking devices 46, 48 are not present, a detection that a communications error with the linking device 46, 48 has occurred, a detection that a primary linking device is being forced to become a secondary linking device, or a detection that a Foundation Fieldbus device (e.g., 38, 40, 42, 44) is unhealthy. The industrial process control system 10 may also detect mismatches between the configuration settings for a Foundation Fieldbus device and the actual hardware configuration for Foundation Fieldbus devices (e.g., 38, 40 ,42, 44), or that a decommissioned device remains on a segment of the industrial process control system 10. Each of the alarm conditions may include a channel identifier and module identifier provided by the linking devices 46 and 48 to help identify where the alarm conditions are originating from. For example, in one embodiment, the channel identifier comes from the 3^{rd} octet of IP address of the linking devices 46 and 48.

Additionally, the module identifier may be extracted from the 4^{th} octet of the IP address of the linking devices 46 and 48.

In addition to the Foundation Fieldbus Diagnostic Alarm conditions, Foundation Fieldbus Alarm Transitions may also be monitored. Thus, the control s system 10 is enabled to provide alarm transitions for third-party Foundation Fielbus devices. Such transitions may include detecting communication errors of H1 Fieldbus devices (e.g., 38, 40, 42, 44) under linking devices 46 and 48 and detecting unhealthy input errors at the H1 Fieldbus devices (e.g., 38, 40, 42, 44). The detected alarm transitions are then translated into a format interpretable by the control system 10, and thus the control system 10 is enabled to provide these alarm transitions to clients of the control system 10. In some embodiments, communication errors may be generated from communication warnings. In such embodiments, a communication warning may be detected when the Fieldbus devices (e.g., 38, 40, 42, 44) respond to the controllers 26 with an error, when a request to a Fieldbus device (e.g., 38, 40, 42, 44) times out, when an attempt to obtain an initial alert state, alert or device revision information fails, or when an attempt to read block data from the Fieldbus device (e.g., 38, 40, 42, 44) fails. If the communication warning persists, the warning can be escalated to a communication error.

With the foregoing in mind, FIG. 6 illustrates the processing of Foundation Fieldbus Diagnostic Alarm Transitions within the industrial process control system 10 in accordance with an embodiment of the present invention. Diagnostic alarm transitions are specific detected events or conditions that generate Foundation Fieldbus alarms. First, a Foundation Fieldbus device (e.g., 38, 40, 42, 44) sends alarm transition information to the attached linking device 46 or 48 (represented by arrow 200), which is then propogated to the controllers 26 (represented by arrow 202). The Foundation Fieldbus process 89 receives the alarm transition information (at block 210). Next, the alarm process 91 detects Foundation Fieldbus Diagnostics Alarm transitions (at block 212) and stores the transitions in a Foundation Fieldbus Diagnostic Alarm queue, which is specific to the linking device 46 or 48 relaying the alarm transition information (at block 214). In certain embodiments, some diagnostic alarm transitions may be detected by comparing the alarm transition information with a list of live devices that are expected to be live within the industrial process control system 10. Next, the alarm transitions are forwarded to the SOE process 90 of the industrial process control system 10 (at block 216). The SOE process 90 may determine if new diagnostic alarms are present, and if so, the SOE process 90 may request, store, and transmit the new alarms to SDI clients (e.g., the alarm server 70). In the embodiment depicted in FIG. 6, the SOE process 90 receives the alarm transitions from the Foundation Fieldbus process 89 (at block 218). The SOE process 90 then stores the alarm transitions in a diagnostic alarm queue (at block 220). Next, the SOE process 90 publishes (i.e., transmits) the Foundation Fieldbus alarm transitions to SDI clients (e.g., the alarm server 70) (at block 222). To receive the published Foundation Fieldbus alarm transitions, the SDI clients may issue a registration request to the SOE process 90. Once the request is accepted by the SOE process 90, the SOE process 90 Foundation Fieldbus alarms to the requesting SDI client, thus providing the alarm transitions for third-party devices to clients of the control system 10.

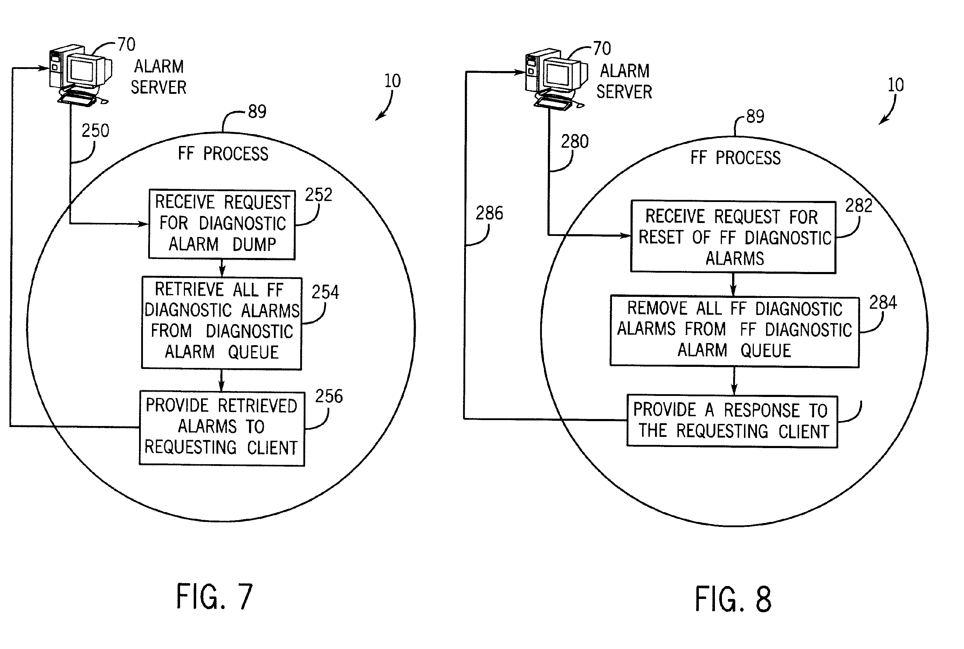

Similar to the alert dump request discussed above, SDI clients (e.g., the alarm server 70) may request Foundation Fieldbus Diagnostic Alarm dumps or snapshots that provide a list of all active Foundation Fieldbus Diagnostic Alarms. Because the alarms and alerts have been translated into a format interpretable by the control system 10, the control system is enabled to provide the alerts to clients of the control system 10. FIG. 7 illustrates an embodiment of such a process. First, an SDI client (e.g. the alarm server 70) sends a Foundation Fieldbus Diagnostic Alarm request to the Foundation Fieldbus process 89 of the industrial process control system 10 (at arrow 250). The dump request may include a specification of channel and/or producer identifiers. If the channel and producer identifiers are specified, the dump request can be directed to alarms for a specific linking device 46 and 48, and/or Foundation Fieldbus device 38, 40, 42, 44. If the channel and producer identifiers are not specified, the dump request may be directed to all alarms within the industrial process control system 10. The Foundation Fieldbus process 89 receives the request (at block 252) and retrieves all of the Foundation Fieldbus Diagnostic alarms from the Foundation Fieldbus Diagnostic Alarm queue (at block 254). Next, the retrieved diagnostic alarms are provided to the requesting SDI client (e.g., the alarm server 70) (at block 256).

Additionally, SDI clients may interact with the Foundation Fieldbus Alarms by submitting Diagnostic Alarm User Behavior Commands to the Foundation Fieldbus process 89. FIG. 8 depicts submission of such commands in accordance with an embodiment of the present invention. The industrial process control system 10 may include a reset user behavior command that removes all normal, non-alarmed state Diagnostic Alarms from the Foundation Fieldbus Diagnostic Alarm queue. First, the SDI client (e.g., the alarm server 70) requests that a Foundation Fieldbus Diagnostic Alarm reset occur (at arrow 280). The Foundation Fieldbus process 89 receives the request (at block 282), and, in response, removes all Foundation Fieldbus diagnostic alarms from the Foundation Fieldbus Disagnostic Alarm queue (at block 284). The Foundation Fieldbus process 89 then submits a confirmation response to the requesting SDI client (e.g., the alarm server 70) (represented by arrow 286).

Technical advantages of the invention include an industrial process control system that monitors and provides diagnostic information for third-party Foundation Fieldbusdevices linked to the industrial process control system. The industrial process control system interprets alarm or alert information provided by fieldbus devices, and creates alarms and or alerts in a format interpretable by an alarm server of the industrial process control system. The industrial process control system can thus provide diagnostic information for devices manufactured by a multitude of manufacturers. Furthermore, the industrial process control system may provide additional customized alerts statuses and user behavior commands by utilizing an additional central data structure in combination with the Foundation Fieldbus alerts and alarms. For example, the central data structure may provide additional flags that enable alarm and alert functionality that is part of the control system but not part of Foundation Fieldbus.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. An industrial process control system (10) comprising:
one or more fieldbus devices (38, 40, 42, 44) configured to communicate alarm or alert information representative of alarms and alerts using a first format;
a linking device (46, 48) connected to the one or more fieldbus devices (38, 40, 42, 44), wherein the linking device (46, 48) is configured to publish the alarm or alert information from the fieldbus devices (38, 40, 42, 44) to one or more computers (28, 30, 32, 34, 36) of the industrial process control system (10);
a controller (26) configured to receive the alarm or alert information from the linking device (46, 48), wherein the controller (26) is configured to interpret the alarm or alert information and create a list of the alarms and alerts in a second format interpretable by an alarm server (70) of the industrial process control system (10), wherein the alarm server cannot interpret the first format.

2. The industrial process control system (10) of claim 1, wherein each of the fieldbus devices (38, 40, 42, 44) comprises a Foundation Fieldbus device and the first format comprises a Foundation Fieldbus format.

3. The industrial process control system (10) of claim 1 or claim 2, wherein the second format comprises alarms and alerts for each of the one or more fieldbus devices (38, 40, 42, 44).

4. The industrial process control system (10) of claim 1, 2 or 3, comprising the alarm server (70), wherein the alarm server (70) is configured to receive the list of the alarms and alerts, and the alarm server (70) is configured to publish at least a portion of the list to alarm server clients (80).

5. The industrial process control system (10) of claim 4, comprising serial data interface (SDI) clients that are configured to selectively request the alarms and alerts for a specific fieldbus device (38, 40, 42, 44) or all of the one or more fieldbus devices (38, 40, 42, 44), and the alarm server (70) is configured to publish at least the portion of the list based upon the request from the alarm server clients (80).

6. The industrial process control system (10) of claim 4 or claim 5, comprising one or more alarm server clients (80) that are configured to selectively subscribe to an alarm and alert notification service, wherein the alarm server (70) is configured to publish at least the portion of the list to the alarm server clients (80) that are selectively subscribed to the alarm and alert notification service.

7. The industrial process control system (10) of any one of claims 1 to 6, wherein the controller (26) is configured to selectively remove all of the alarms and alerts from t0he list of alarms and alerts based upon a request from a client (80).

8. The industrial process control system (10) of any one of claims 1 to 7, wherein the controller (26) is configured to selectively remove all of the alarms and alerts for a specific fieldbus device (38, 40, 42, 44) from the list of alarms and alerts based upon a request from a client (80).

9. The industrial process control system (10) of any one of claims 1 to 8, wherein the controller (26) is configured to maintain a history of the alarms and alerts.

10. The industrial process control system (10) of any one of claims 1 to 9, wherein the controller (26) is configured to receive, over SDI (152), a dump command request to provide a complete list of all active alarms and alerts, and/or a reset command request to remove all non-active alarms from the list of alarms and alerts.

11. A method comprising:
receiving, at a controller (26), device information for a field device (38, 40, 42, 44) comprising alarm or alert information in a first format;
translating, using the controller (26), the device information in the first format into a second format interpretable by an alarm server (7), wherein the alarm server (70) cannot interpret the first format;
creating, using the controller (26), a list of the device information in the second format; and
providing to the alarm server (70), from the controller (80), at least a portion of the list in the second format to the alarm server (70).

12. The method of claim 11, wherein the field device (38, 40, 42, 44) is a Foundation Fieldbus device, and the first format comprises a Foundation Fieldbus format.

13. The method of claim 11 or claim 12, comprising receiving, at the controller (26), a request to reset alarms or alerts for a specific linking device (46, 48), and removing the alarms or alerts for the specific linking device (46, 48) from the list.

14. The method of claim 11, 12 or 13, comprising receiving a request, from the client (80), for an entire list of alarms and alerts, and providing to the client (80) the list of device information.

15. The method of claim 11, 12, 13 or 14, comprising receiving a request, from a client (80), for a specific portion of the list, and providing to the client (80) only the specific portion of the list requested by the client (80).

16. A non-transitory, tangible computer readable medium comprising executable code comprising instructions for performing the method of any one of claims 11 to 15.
